Europäisches Patentamt

European Patent Office

Office européen des brevets

(19)

(11) **EP 0 873 524 B1**

(12) **EUROPÄISCHE PATENTSCHRIFT**

(45) Veröffentlichungstag und Bekanntmachung des Hinweises auf die Patenterteilung:
**31.03.2004 Patentblatt 2004/14**

(21) Anmeldenummer: **97900553.5**

(22) Anmeldetag: **02.01.1997**

(51) Int Cl.$^7$: **G01T 3/00**

(86) Internationale Anmeldenummer:
**PCT/EP1997/000004**

(87) Internationale Veröffentlichungsnummer:
**WO 1997/025631 (17.07.1997 Gazette 1997/31)**

(54) **METHODE ZUR QUANTITATIVEN, ZERSTÖRUNGSFREIEN BESTIMMUNG VON SPALTMATERIAL**

QUANTITATIVE NON-DESTRUCTIVE MEASUREMENT OF FISSILE MATERIAL

PROCEDE DE DETERMINATION QUANTITATIVE NON DESTRUCTIVE DE MATIERE FISSILE

(84) Benannte Vertragsstaaten:
**AT BE CH DE DK ES FI FR GB GR IE IT LI LU NL PT SE**

(30) Priorität: **08.01.1996 DE 19600418**

(43) Veröffentlichungstag der Anmeldung:
**28.10.1998 Patentblatt 1998/44**

(73) Patentinhaber: **Hage, Walter**
**76879 Bornheim (DE)**

(72) Erfinder: **Hage, Walter**
**76879 Bornheim (DE)**

(74) Vertreter: **Weinmiller, Jürgen**
**Lennéstrasse 9**
**82340 Feldafing (DE)**

(56) Entgegenhaltungen:
**EP-A- 0 307 302      WO-A-96/12974**
**US-A- 4 483 816      US-A- 5 278 417**

• **PATENT ABSTRACTS OF JAPAN vol. 008, no. 065 (P-263), 27.März 1984 & JP 58 211682 A (NIPPON GENSHIRYOKU JIGYO KK;OTHERS: 01), 9.Dezember 1983,**

**Beschreibung**

Die Erfindung bezieht sich auf eine Methode zur quantitativen Bestimmung von Spaltmaterial gemäss dem Oberbegriff des Anspruchs 1. Dieser Oberbegriff geht von der Druckschrift United States Patent Number 4483816 aus.

Unter Spaltmaterial versteht man alle Uran-und Plutonium-Isotope, die durch niedrig energetische Neutronen (thermische Neutronen) spaltbar sind. Es handelt sich dabei um die Uranisotope der Massenzahl 233 und 235 und um Plutoniumisotope der Massenzahl 239 und 241. Durch den zunehmenden Umgang mit diesen Materialien in der Kemindustrie entstanden große Mengen von radioaktivem Abfall, der in Fässern mit einem Volumen von 20-200 Litern zwischengelagert wird. Dieser Abfall entsteht sowohl bei der Herstellung von Reaktorbrennelementen, im Kernkraftwerksbetrieb, bei der Wiederaufarbeitung solcher Elemente und bei der Entsorgung von kemtechnischen Anlagen des nuklearen Brennstoffkreislaufes.

Die vorliegende Erfindung erlaubt den Bau einer Messanordnung zum Nachweis kleinster Mengen von Spaltmaterial in der Größenordnung von 1 mg und zur zerstörungsfreien absoluten Messung von Spaltmaterial ab etwa 10 mg bis zu einigen fein verteilten 100 g. Diese Messanordnung, bestehend aus einem Messkopf, einer gepulsten Neutronenquelle und einer elektronischen Datenerfassungsanlage kann zur kostengünstigen radioaktiven Abfallmessung großer Mengen von Abfallgebinden oder zur Spaltstofflusskontrolle eingesetzt werden, falls der Spaltstoff in kleiner Massendichte vorliegt. Hierbei ist es wichtig, die Masse spaltbaren Materials absolut zu ermitteln. Dies ist bei der Methode nach der erwähnten Druckschrift nicht möglich. Daher ist es Aufgabe der Erfindung, eine verbesserte Methode anzugeben, mit der die Masse des Spaltmaterials in einem Gebinde absolut ermittelt werden kann. Diese Aufgabe wird durch die in Anspruch 1 definierte Methode gelöst.

Die Erfindung wird nun anhand eines bevorzugten Ausführungsbeispiels und der beiliegenden Zeichnungen näher erläutert.

Fig.1 zeigt eine Messvorrichtung, auch Messkopf genannt, die bei der erfindungsgemässen Methode eingesetzt wird.

Fig.2 zeigt das zeitliche Zusammenspiel der Vorgänge bei der erfindungsgemässen Methode.

Fig.3 zeigt Zähleinrichtungen, die bei der erfindungsgemässen Methode verwendet werden.

Fig.4 zeigt einen ersten Frequenzanalysator, der bei der erfindungsgemässen Methode verwendet wird, und zwar für regelmässige Beobachtungsintervalle konstanter Dauer.

Fig.5 zeigt eine Variante zu Fig.4 für signalgetriggerte Beobachtungsintervalle konstanter Dauer.

Fig.6 zeigt eine weitere Variante zu Fig.4, bei der Beobachtungsintervalle unterschiedlicher Dauer verwendet werden.

Fig.7 zeigt eine Variante zu Fig.5, ebenfalls für Beobachtungsintervalle unterschiedlicher Dauer.

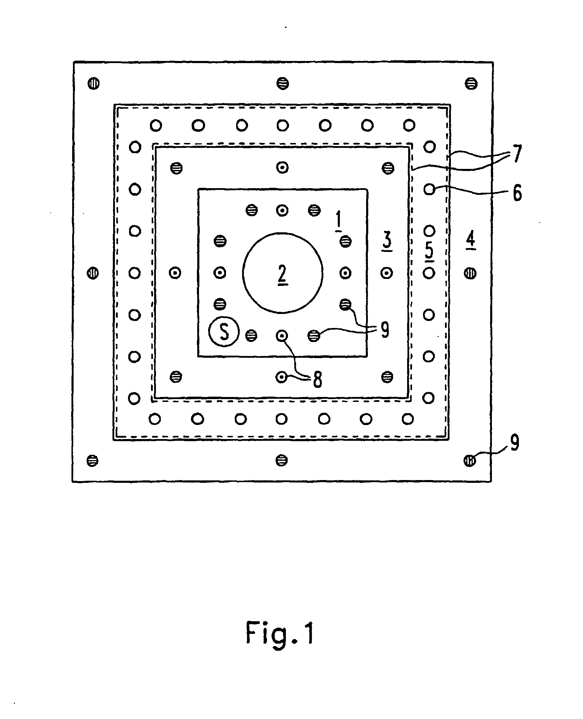

Bevor auf die erfindungsgemässe Methode eingegangen wird, soll zuerst der theoretische Hintergrund auch anhand der Messvorrichtung beleuchtet werden, die in Fig.1 gezeigt ist. Diese Vorrichtung besitzt eine Messkammer 1 zur Aufnahme der Probe 2 und der gepulsten Neutronenquelle S. Die Kammer ist von einem Graphitmantel 3 umgeben, der wiederum von einer Spaltneutronenzählanlage, und diese von einer Abschirmung 4 umgeben ist. Die Spalmeutronenzählanlage besteht aus einem Moderator 5 mit über dessen Volumen verteilten Neutronenzählrohren 6 und einer Ummantelung aus Bor und Kadmium 7. Sie umgibt die Graphitummantelung in $2\pi$- oder $4\pi$-Geometrie um eine möglichst hohe Neutronenansprechwahrscheinlichkeit $\varepsilon$ zu erhalten.

Durch eine geeignete Wahl der Moderator Schichtdicke und des Verhältnisses Moderator / Zählrohrvolumen kann man die mittlere Lebensdauer $1/\lambda$ in dieser Zählanlage so dimensionieren, dass die mittlere Lebensdauer der Neutronen $1/\Lambda$ in der Messkammer sehr viel größer ist. Dies ist notwendig, damit die durch jeden Neutronenimpuls der gepulsten Neutronenquelle erzeugte Neutronenbevölkerung in dieser Zählanlage abgeklungen ist. Erst dann kann man mit dieser Zählanlage praktisch quelluntergrundfrei die dort gemessenen induzierten Spaltneutronen mit den in der Probe induzierten Spaltungen korrelieren. Diese sogenannte Spalmeutronenzählanlage ist dann nach jedem Quellimpuls frei von Quellneutronen, wenn zwischen Quellimpuls und Messbeginn in jedem Messzyklus eine Pausenzeit $\tau_0$ liegt, für die gilt:

$$e^{-\lambda\tau_0} \approx 10^{-a} \quad a = 4,5,6, \cdots$$

Neutronenzählrohre 8 der Messkammer 1 und des Graphitmantels 3 dienen zur Messung des zeitlichen Verlaufes des thermischen Neutronenflusses in Nähe der Oberfläche der Probe. Die Zählrohre 9 in der Messkammer, dem Graphitmantel oder in der Abschirmung werden zur Normierung der Neutronenquellstärke der gepulsten Quelle verwendet.

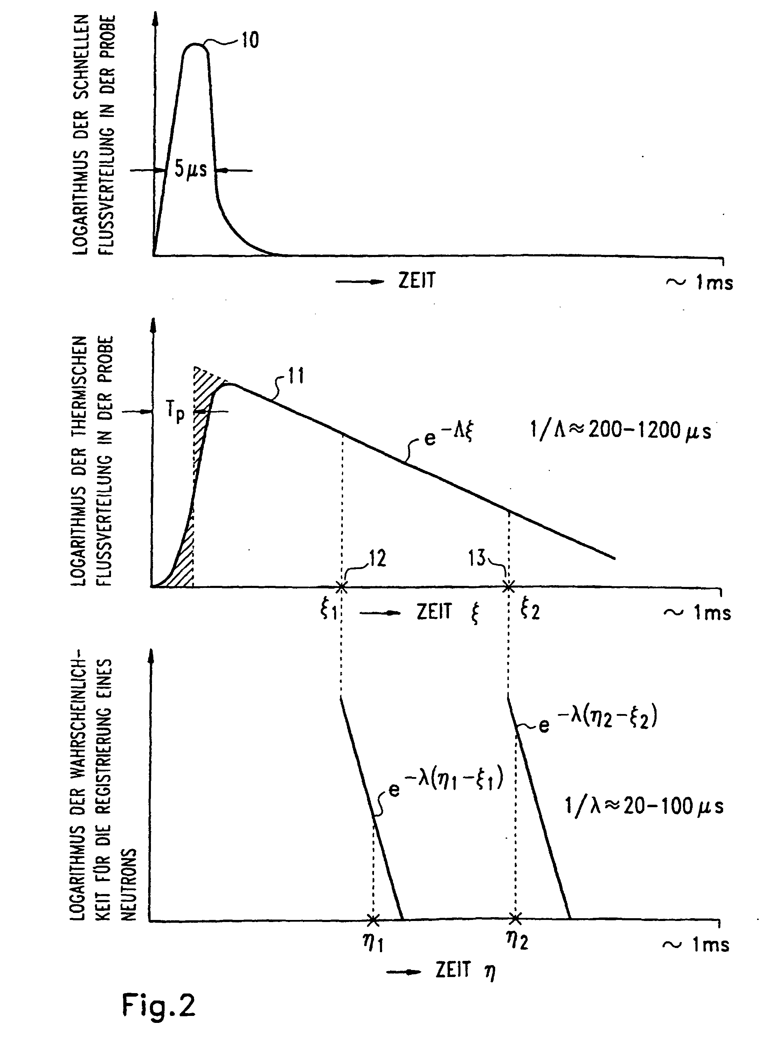

Die gepulste Neutronenquelle erzeugt im Messkopf kurzzeitig Impulse von schnellen Neutronen mit einer einstellbaren Intensität von etwa $10^3$ bis etwa $10^7$ Neutronen pro Impuls (Fig.2.). Der Messkopf hat einen zentralen Hohlraum als Messkammer zur Aufnahme der Probe während einer Messung. Die schnellen Neutronen eines Quellimpulses 10 (Siehe oberstes Diagramm von Fig.2) werden innerhalb von etwa 5 µs bis etwa 20 µs durch den Graphitmantel und das Moderatormaterial der Probe auf eine thermische Neutronenenergieverteilung abgebremst. Dies geht aus dem mittleren Diagramm der Fig.2 hervor. Diese Neutronen diffundieren dann als thermische Neutronen in der Probe und dem Graphitmantel. Die Intensität dieses so erzeugten zeit- und raumabhängigen thermischen Neutronenflusses $\Phi(\xi,r)$ (Neutronen/cm$^2$s) zerfällt langsam gemäss der Kurve 11 durch Ausströmen und Absorption von Neutronen. Während dieses Zerfalls werden Spaltungen im Spaltmaterial der Probe zum Beispiel zu Zeitpunkten 12 und 13 induziert. Pro Spaltung werden im statistischen Mittel $\nu$ Neutronen emittiert mit der bekannten Wahrscheinlichkeitsverteilung $P_\nu$. Die Zahl $S_{(1)}(\xi,r)$ der emittierten schnellen Einzelneutronen pro Volumen-und Zeiteinheit im Zeitintervall $[\xi, \xi+d\xi]$ ist demnach:

$$S_{(1)}(\xi,r) = \Sigma_f \Phi(\xi,r) \sum_{\nu=1}^{\infty} \binom{\nu}{1} P_\nu \qquad (1)$$

$\Sigma_f$ = makroskopischer Spaltquerschnitt für thermische Neutronen [1/cm]

Die Zahl der emittierten Neutronenpaare pro Volumen- und Zeiteinheit ist:

$$S_{(2)}(\xi,r) = \Sigma_f \Phi(\xi,r) \sum_{\nu=2}^{\infty} \binom{\nu}{2} P_\nu \qquad (2)$$

Allgemein ergibt sich die Zahl der emittierten Neutronenmultipletts pro Volumen-und Zeiteinheit aus der folgenden Beziehung:

$$S_{(k)}(\xi,r) = \Sigma_f \Phi(\xi,r) \sum_{\nu=k}^{\infty} \binom{\nu}{k} P_\nu \quad k=1,2,3, \qquad (3)$$

Da die thermische Neutronenbevölkerung als Folge eines Neutronenimpulses mit schnellen Neutronen nach dem niedrigsten Eigenwert zerfällt, können in diesem Zustand die Zeit- und Raumkoordinaten mit guter Näherung separiert werden. Die induzierten spezifischen Neutronenmultipletts $S_{(k)}(\xi,r)$ k=1,2,3,··· können somit nach einer Integration über das Volumen der Probe durch Punkineutronenmultipletts angenähert werden.

$$S_{(k)}(\xi) = \int_{V(PROBE)} S_{(k)}(\xi,r) dV \quad k=1,2,3, \qquad (4)$$

$S_K(\xi)$ ist dann die von der Probe im Zeitintervall $[\xi,\xi+d\xi]$ emittierte Rate an schnellen Neutronensingletts (k = 1), Dubletts (k = 2), Tripletts (k = 3). Diese Größen sind direkt proportional der Masse G des Spaltmaterials. Es ist:

$$S_{(k)}(\xi) = \Sigma_f \Phi(\xi) V \nu_{(k)} \quad k=1,2,3, \qquad (5)$$

$$\nu_{(k)} = \sum_{\nu=k}^{\infty} \binom{\nu}{k} P_\nu$$

Im Falle von zwei durch thermische Neutronen spaltbaren Spaltstoffen in der Probe ist:

$$\Sigma_f V v_{(k)} = V \left[ \frac{L}{A_1} \gamma_1 \sigma_{f1} v_{(k)1} + \frac{L}{A_2} \gamma_2 \sigma_{f2} v_{(k)2} \right] \tag{6}$$

Aus Gl. 5 und 6 folgt mit: $G_i = V\gamma_i$

$$S_{(k)}(\xi) = \Phi(\xi) \frac{L}{A_1} \sigma_{f1} G_1 v_{(k)1} \left[ 1 + \frac{A_1 G_2 v_{(k)2} \sigma_{f2}}{A_2 G_1 v_{(k)1} \sigma_{f1}} \right] \tag{7}$$

L = Loschmidtsche Zahl [Atome / Mol]

$A_i$ = Atomgewicht von Spaltmaterial i, i = 1,2 [g / Mol]

$\gamma_i$ = spezifische Masse des Spaltmaterials i, i =1,2 [g /cm$^3$]

$\sigma_{fi}$ = Spaltquerschnitt des Spaltmaterials i, i =1,2 [cm$^2$ ]

$v_{(k)i}$ = Zahl von Neutronenmultipletts der Ordnung k durch Kernspaltung mit thermischen Neutronen von Spaltmaterial i, i = 1,2

i = 1 ist $^{235}$U; i = 2 ist $^{239}$Pu

Der thermische Neutronenfluss $\Phi(\xi)$ in der Messkammer zerfällt meist nach einem einfachen Exponentialgesetz:

$$\Phi(\xi) = \Phi_0 e^{-\Lambda \xi} \tag{8}$$

A = Zerfallskonstante der Neutronen in der Messkammer [1/s].

Dadurch folgt auch die Emissionsrate von korrelierten Neutronenmultipletts einem Exponentialgesetz:

$$S_{(k)}(\xi) = S_{(k)}(0) e^{-\Lambda \xi} \tag{9}$$

Ein Teil dieser schnellen Neutronenmultipletts entkommt aus der Probe 2 und der Graphitummantelung 3 der Messkammer 1 und wird in der Spaltneutronenzählanlage zunächst auf thermische Neutronenenergie abgebremst und in $^3$He Neutronenzählrohren nach Absorbtion in elektrische Signale umgewandelt.

Zur Korrelation "Spaltungen" auf der Zeitachse $\xi$ mit der "Frequenzverteilung der Spaltneutronen" auf der Zeitachse $\eta$ im Beobachtungsintervall der Neutronensignale $[\eta_1, \eta_1 + \tau]$, $\eta_1 \geq \tau_0$ tragen in jedem Messzyklus alle Spaltungen bei von $0 \leq \xi \leq \eta_1$. Deshalb muß der thermische Neutronenfluss in der Messkammer als Funktion der Zeit $\xi$ nach jedem Neutronenquellpuls registriert werden (Siehe unterstes Diagramm in Fig.2) und seine Zeitkoordinaten müssen mit denen der Spaltneutronenzählanlage übereinstimmen.

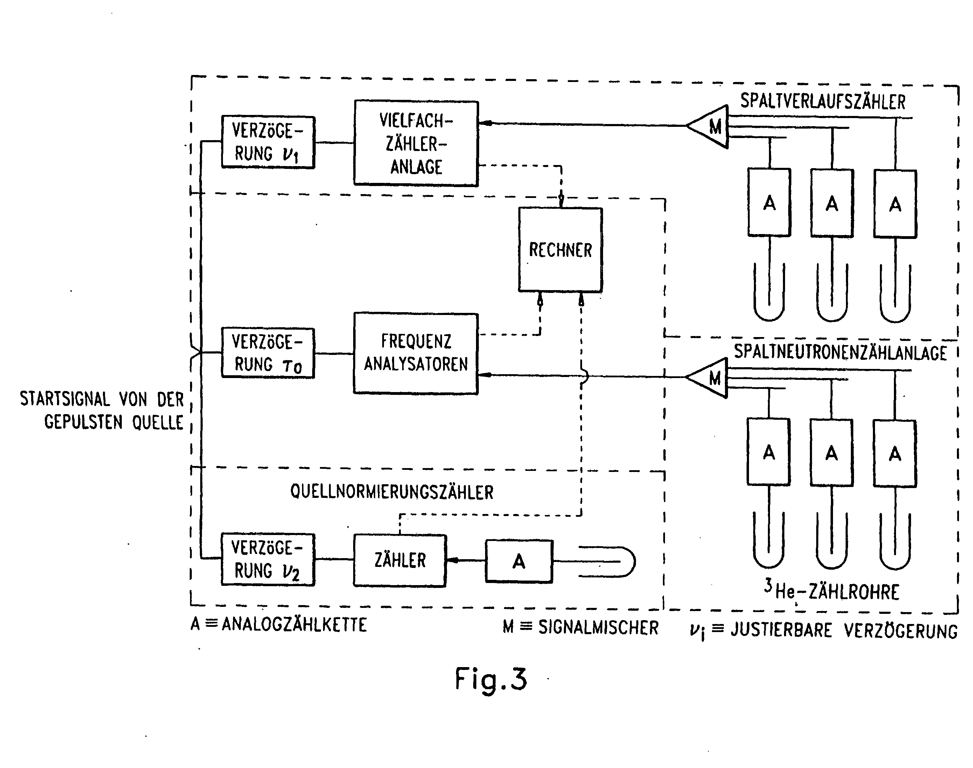

Zur Durchführung der Messungen werden 3 verschiedene Zähleinrichtungen (Fig.3.) benötigt:

1. Die Neutronenzählanlage zur Bestimmung der mittleren Neutronenausbeute der gepulsten Quelle während der Messung einer Probe. Damit können die korrelierten Multipletts und die induzierten Spaltungen auf eine einheitliche Neutronenquellstärke der gepulsten Quelle normiert werden. Korrelierte Multipletts kommen im Gegensatz zu unkorrelierten Multipletts von einer einzigen Spaltung. Diese Zählanlage wird im Folgenden als Quellnormierungszähler bezeichnet.

2. Die Zählanlage zur Messung des zeitliche Verlaufes des Neutronenflusses in der Messkammer. Diese wird im Folgenden als Spaltverlaufszähler bezeichnet.

3. Die Neutronenzählanlage zur Messung der durch induzierte Spaltungen in der Probe erzeugten Neutronen. Sie umgibt den Graphitmantel der Messkammer in $2\pi$-oder $4\pi$-Geometrie.

Der Quellnormierungszähler besteht aus einem oder mehreren Neutronenzählrohren für thermische Neutronen. Diese sind entweder in der Messkammer, dem Graphitmantel oder in der den Messkopf umhüllenden Neutronenabschirmung untergebracht. Die Zählrohre sind über Signalverstärker und Signalhöhendiskriminatoren an einen Zähler angeschlossen. Dieser wird mit jedem Neutronenquellpuls während einer Messung gestartet und nach 20 μs bis 1000

μs nach jedem Quellpuls wieder gestoppt.

Der Spaltverlaufszähler verfügt ebenfalls über thermische Neutronenzählrohre, die teilweise in der Messkammer oder dem Graphitmantel untergebracht sind und teilweise mit Bor- oder Kadmiumfiltem umhüllt sein können, Diese Zählrohre sind über Signalverstärker und Diskriminatoren an ein Vielfachzählersystem (Multi-Channel Scaler) angeschlossen, in dem der zeitliche Verlauf der Zählrate registriert wird. Das Zählersystem wird periodisch mit dem Auslösesignal des Neutronenquellimpulses gestartet und wird kurz vor dem folgenden Quellimpuls gestoppt. Diese periodische Registrierung des zeitlichen Verlaufes der Neutronenbevölkerung in der Messkammer wird während der gesamten Probenmesszeit durchgeführt und gibt den zeitlichen Verlauf von $\Phi(\xi)$ (Siehe Fig.2 mittleres Diagrammm). Dieser Verlauf ist wichtig zur Berechnung der möglichen Neutronenmultipletts oder der Wahrscheinlichkeiten für die Registrierung von $\mu$ Signalen, die in der Spaltneutronenzählanlage in den $\nu$ verschiedenen Beobachtungsintervallen theoretisch erwartet werden.

Die Neutronenzählrohre der Spaltneutronenzählanlage sind in einen Moderator eingebettet, der den Graphitmantel der Messkammer in $2\pi$- oder in $4\pi$-Geometrie umschließt. Die freien Oberflächen des Moderators sind mit Neutronenfiltern aus Bor oder Kadmium umhüllt. Jedes Zählrohr oder jede Zählrohrgruppe mit 2,3, ···· einzelnen Zählrohren ist über Signalverstärker und Signaldiskriminatoren über einen Signalmischer an einen Signalfrequenzanalysator angeschlossen. Dieser Frequenzanalysator kann die Signalfrequenz nach grundsätzlich zwei verschiedenen Verfahren messen:

Im ersten Verfahren werden die Beobachtungsintervalle zur Signalfrequenzmessung periodisch geöffnet nach der Zeitdauer $\tau$ am Beobachtungsende wieder geschlossen und die Zahl der sich in $\tau$ befindlichen Signale registriert.

Im zweiten Verfahren öffnet jedes Signal, das im Intervall $[\eta_1, \eta_1 + d\eta_1]$ gemessen wird mit einer Verzögerung T einen Beobachtungsintervall $[\eta_1 + T, \eta_1 + T + \tau]$, und speichert zu diesem Zeitpunkt die Zahl der in $\tau$ vorhandenen Neutronensignale. Beide Verfahren werden nun beschrieben unter der Annahme, dass die Signale im Beobachtungsintervall $\tau$ mit Hilfe eines Schieberegisters verzögert werden. Das Schieberegister kann natürlich auch durch programmierbare "Gate Arrays" oder andere elektronische Bausteine ersetzt werden.

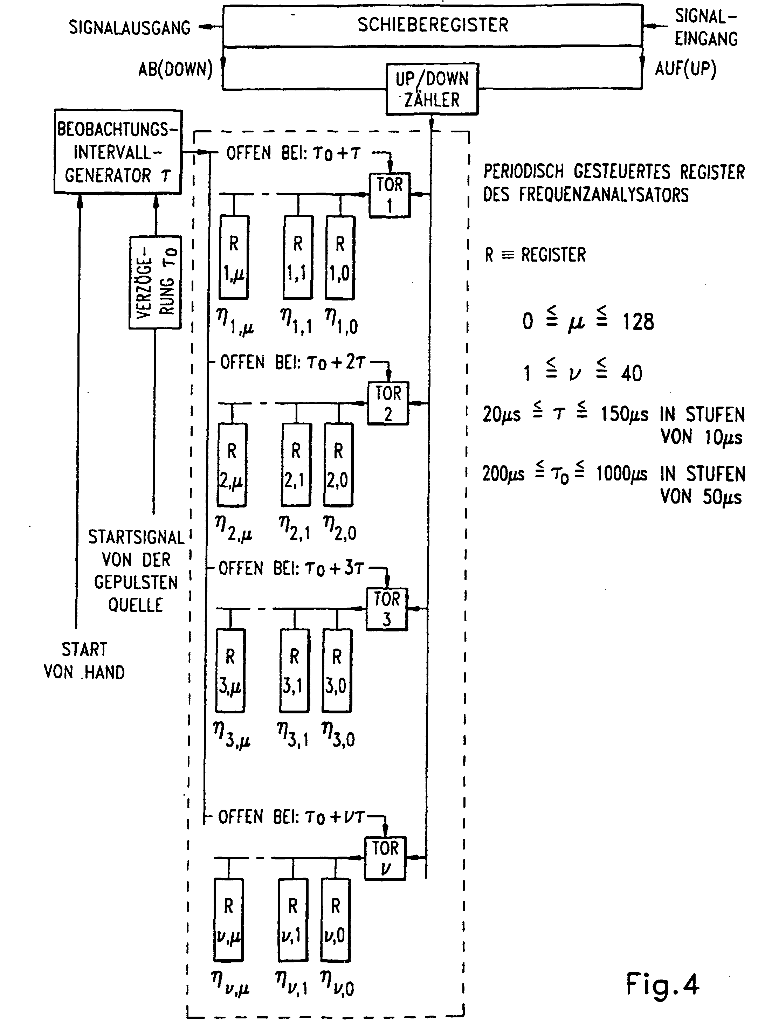

Im ersten Verfahren (Fig.4) werden die Neutronensignale am rechten Ende in das Schieberegister kontinuierlich eingespeist. Jedes in das Register eintretende Signal erhöht den Zählerstand eines Up/Down-Zählers um 1, jedes aus dem Register austretende erniedrigt dessen Inhalt um 1. Die Verweilzeit eines Signals im Schieberegister ist gleich der Zeitdauer des Beobachtungsintervalles $\tau$. Dadurch ist zu jedem Zeitpunkt der Zählerstand dieses Zählers gleich der Zahl der Signale im Beobachtungsintervall. Wird das Tor A zum Zeitpunkt $\tau_0 + \tau$ geöffnet, kann dessen Zählerstand in den Registern $R1,0;R1,1;R1,2;···R1,\mu$ gespeichert werden. Sind zum Beispiel 3 Signale im U/D-Zähler zum Zeitpunkt $\tau_0 + \tau$, wird nur der Inhalt des Registers $R1,3$ um 1 erhöht. 3 wäre dann die Zahl der Signale im Beobachtungsintervall $[\tau_0, \tau_0 + \tau]$. $\tau_0$ ist die verstrichene Zeit zwischen Auslösung des letzten Neutronenimpulses der Quelle und dem Beginn der periodisch wiederholten Messung der Frequenzverteilung in $\nu$ Beobachtungsintervalien $\tau$. Wird das $\nu$-te Tor zum Zeitpunkt $\tau_0 + \nu\tau$ geöffnet, steht im U/D-Zähler ein Beitrag zur Frequenzverteilung des Beobachtungsintervalles $[\tau_0 + (\nu-1)\tau, \tau_0 + \nu\tau]$. Nach einer hinreichenden Zahl von $N_p$ Neutronenquellpulsen (etwa $10^4$ bis $10^6$) steht in den Registern $R\nu,\mu$ eine zweidimensionale Frequenzverteilung. $n_{\nu,\mu}^+$ ist dann die Zahl der Ereignisse mit $\mu$ Signalen registriert im $\nu$-ten Beobachtungsintervall der Größe $[\tau_0 + (\nu - 1)\tau, \tau_0 + \nu\tau]$. Die Frequenz $p_{\nu,\mu}^+$ für den Intervall. $[\tau_0 + (\nu-1)\tau, \tau_0 + \nu\tau]$ $\mu$ Signale zu haben ergibt sich aus:

$$p_{\nu,\mu}^+ = p_\mu^+ \left[\tau_0 + (\nu - 1)\tau, \tau_0 + \nu\tau\right] = \frac{n_{\nu,\mu}^+}{\sum_{\mu=0}^{\infty} n_{\nu,\mu}^+} = p_\mu^+(\nu,\tau) \qquad (10)$$

$$\nu = 1,2,3,\cdots \quad \mu = 0,1,2,3\cdots$$

Die Zahl der Einzelsignale oder der Beobachtungswert der Einzelsignale ergibt sich aus dem ersten faktoriellen Moment für den $\nu$-ten Beobachtungsintervall. Es ist:

$$m_{(1)}^+(\nu,\tau) = \sum_{\mu=1}^{\infty} \binom{\mu}{1} p_\mu^+(\nu,\tau) \qquad (11)$$

Der Beobachtungswert eines Multipletts der Ordnung k für den $\nu$-ten Intervall folgt aus dem k-ten faktoriellen Moment der Frequenzverteilung $p_\mu^+(v,\tau)$:

$$m_{(k)}^+(v,\tau) = \sum_{\mu=k}^{\infty} \binom{\mu}{k} p_\mu^+(v,\tau) \qquad\qquad (12)$$

Bei einer Auswertung der Messdaten werden die Frequenzverteilungen $p^+(v,\tau)$, oder deren faktorielle Momente $m_{(k)}^+(v,\tau)$ mit den theoretischen Ausdrücken für die Wahrscheinlichkeiten $p_\mu(v,\tau)$ oder den Erwartungswerten $m_{(k)}(v,\tau)$ der Multipletts gleichgesetzt. Das einfachste numerische Lösungsverfahren ergibt sich, wenn man den Erwartungswert der Multipletts der Ordnung k dem entsprechenden Beobachtungswert gleicher Ordnung gleichsetzt. Der Erwartungswert eines Multipletts der Ordnung k ergibt sich aus dem k-ten faktoriellen Moment der Wahrscheinlichkeitsverteilung $p_\mu(v,\tau)$:

$$m_{(k)}(v,\tau) = \sum_{\mu=k}^{\infty} \binom{\mu}{k} p_\mu(v,\tau) \qquad\qquad (13)$$

$p_\mu(v,\tau)$=Wahrscheinlichkeit $\mu$ Signale im Intervall $[\tau_0 + (v - 1)\tau, \tau_0 + v\tau]$ vorzufinden. Der Erwartungswert der Ordnung k ist eine Funktion der Masse des Spaltmaterials, von bekannten neutronenphysikalischer Daten, von Zeitfunktionen, die die Zeitabhängigkeit der Spaltrate und der Neutronenregistrierung berücksichtigen, der mittleren Neutronenquellstärke und der Wahrscheinlichkeit $\varepsilon$, mit der die induzierten Spaltneutronen in der Spaltneutronenzählanlage endeckt werden.

Zur Erhöhung der statistischen Genauigkeit der Messdaten ist es angeraten, die Summe der Erwartungswerte über alle $v_{MAX} = N_1$ Zeitintervalle den entsprechenden Beobachtungswerten gleichzusetzen.

$$m_{(k)}(v,\tau) \approx m_{(k)}^+(v,\tau) \qquad\qquad (14)$$

$$m_{(k)}(N_1) = \sum_{v=1}^{N_1} m_{(k)}(v,\tau) \approx \sum_{v=1}^{N_1} m_{(k)}^+(v,\tau) \qquad\qquad (15)$$

Durch diese Beziehung erhält man 1,2 oder 3 voneinander unabhängige Gleichungen für k = 1, k =1 und 2 und k = 1,2 und 3.

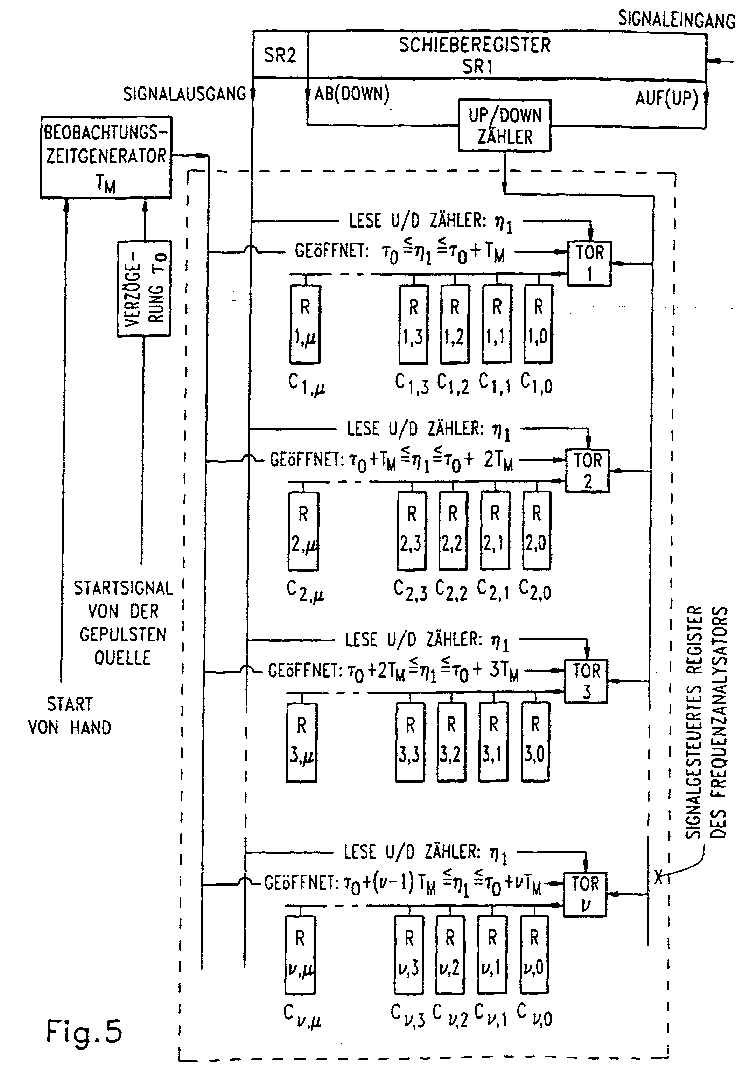

Im zweiten Verfahren (Fig.5) werden die Signale der Zählrohre der Spaltneutronenzählanlage kontinuierlich in ein Schieberegister eingespeist. Jedes in das Schieberegister eintretende Signal erhöht den Zählerstand eines U/D-Zählers um 1, und jedes aus dem ersten Teil des Schieberegisters SR1 austretende Signal erniedrigt diesen um 1. Die Durchlaufzeit $\tau$ eines Signals durch den ersten Teil des Schieberegisters SR1 ist identisch mit der Zeitdauer des Beobachtungsintervalles $\tau$.

Die Durchlaufzeit T eines Signals durch den zweiten Teil des Schieberegisters SR2 erlaubt die Einstellung einer Verzögerung T zwischen dem Austritt des Signals aus dem ersten Teil SR1 und dem Austritt aus dem zweiten Teil SR2 des Schieberegisters. Jedes aus dem zweiten Teil SR2 des Schieberegisters austretende Signal definiert den Zeitpunkt zur Abfrage des U/D-Zählers. Der Beobachtungszeitgenerator erlaubt die Speicherung der Zählerinhalte der U/D-Zähler in bestimmten Messzeitintervallen $[\tau_0 + (v - 1)T_M \leq \eta_1 \leq \tau_0 + vT_M]$ nach jedem Neutronenquellpuls mit $v = 1,2,3\cdots$. Jedes Neutronensignal, das während eines dieser periodischen Messintervalle $T_M$ aus dem zweiten Teil SR2 des Schieberegisters austritt, gibt den Befehl zur Speicherung des Zählerinhaltes des jeweiligen U/D-Zählers in dem entsprechende Register $R_{v,\mu}$, indem es dieses um 1 erhöht. Damit ist der Zählerstand $C_{v,\mu}$ in diesem Register nach $N_p$ Neutronenquellimpulsen identisch mit der Zahl von Zählereignissen mit $\mu$ Signalen im v-ten Messzeitintervall $T_M$.

Die zu $C_{v,\mu}$ zugehörige Frequenz ist:

$$q_{v,\mu}^{+} = \frac{C_{v,\mu}}{\sum\limits_{\mu=0}^{\infty} C_{v,\mu}} = q_{1,\mu}^{+}(v,\tau,T_M) \qquad v=1,2,3\cdots \qquad \mu=1,2,3\cdots \qquad (16)$$

Durch Bildung der faktoriellen Momente der Ordnung k erhält man den Beobachtungswert der Multipletts der Ordnung 1+k.

$$m_{(1,k)}^{+}(v,\tau,T_M) = \sum_{\mu=k}^{\infty} \binom{\mu}{k} q_{1,\mu}^{+}(v,\tau,T_M) \qquad\qquad\qquad (17)$$

$m_{(1,0)}^{+}(v,\tau,T_M)$ ist der Beobachtungswert eines Multipletts der Ordnung 1 im v-ten Registrierzyklus nach $N_p$ Neutronenquellimpulsen oder auch die mittlere Zahl der Einzelsignale. $m_{(1,1)}^{+}(v,\tau,T_M)$ und $m_{(1,2)}^{+}(v,\tau,T_M)$ sind somit die mittlere Zahl von Signalpaaren und Dreifachsignalen, die im v-ten Registrierzyklus nach $N_p$ Neutronenquellimpulsen beobachtet werden. Die mittlere Zahl von Einzelsignalen kann nur bestimmt werden, wenn diese in jedem der v Intervalle gemessen wird, oder im Frequenzanalysator auch die Registrierung von Ereignissen mit 0 Signalen im U/D-Zähler vorgesehen ist. Dieses Register war im Frequenzanalysator mit periodischer Öffnung der Beobachtungsintervalle auch notwendig. Beide, die Signalfrequenz $q_{1,\mu}^{+}(v,\tau,T_M)$ und deren faktoriellen Momente $m_{(1,k)}^{+}(v,\tau,T_M)$ können theoretischen Ausdrücken wie den Wahrscheinlichkeiten $q_{1,\mu}(v,\tau,T_M)$ und den Erwartungswerten von Multipletts $m_{(1,k)}(v,\tau,T_M)$ annähernd gleich gesetzt werden. Es ist:

$$q_{1,\mu}(v,\tau,T_M) \approx q_{1,\mu}^{+}(v,\tau,T_M) \qquad\qquad (18)$$

$$m_{(1,k)}(v,\tau,T_M) \approx m_{(1,k)}^{+}(v,\tau,T_M) \qquad\qquad (19)$$

Die numerische Auswertung ist wieder besonders einfach, wenn nicht die Wahrscheinlichkeiten, sondern deren faktorielle Momente in Form der Multiplette verwendet werden.

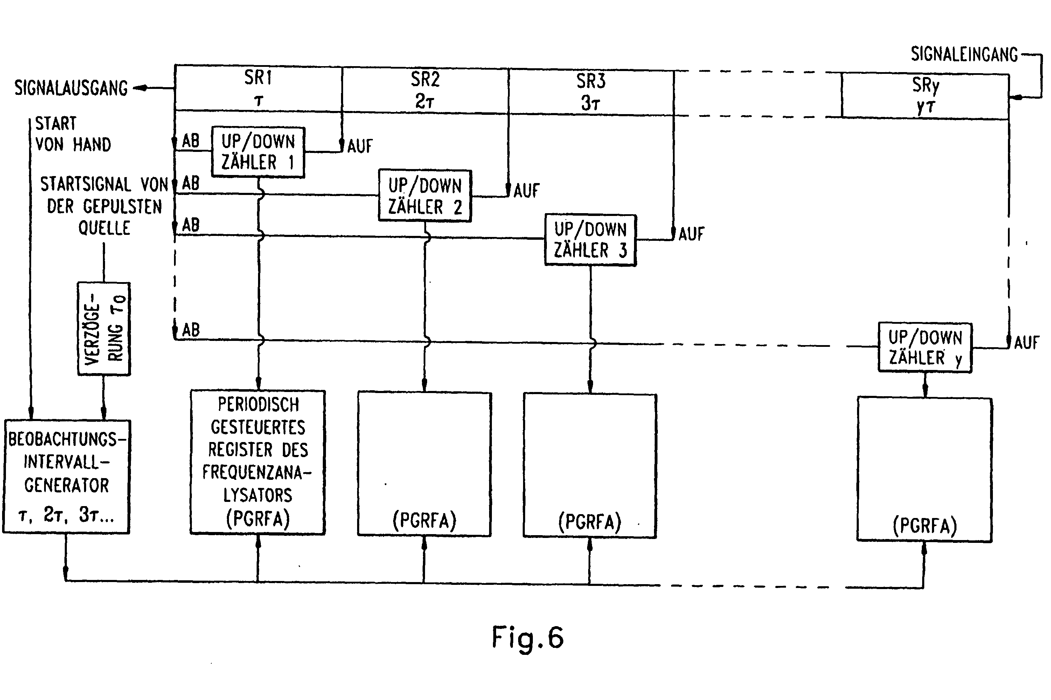

Beide Typen von Frequenzanalysatoren können mit mehreren in Serie geschalteten Schieberegistern gebaut werden. Damit erreicht man während einer Messung eine Bestimmung der Frequenzverteilung, sowohl in Abhängigkeit von der Dauer der Beobachtungsintervalle $\tau$, als auch von der Intervallnummer v nach jedem Neutronenquellpuls. Fig. 6 gibt für Y periodische Beobachtungsintervalle ein prinzipielles Schema für eine solche Frequenzmessung. Die Signale werden in das Schieberegister SRY eingespeist. Jedes eintretende Signal erhöht den Zählerstand des Up/Down-Zählers Y. Wird dessen Zählerstand bei jedem aus dem Register SR1 austretenden Signal um 1 vermindert und periodisch registriert, erhält man die Frequenz für einen Satz von Intervallen der Größe $\tau_Y = Y_\tau$ mit Y= 1,2,3$\cdots$. Die Periode der Registrierung des Zählerstandes des Up/Down-Zählers kann so gewählt werden, dass sich die Intervalle entweder überlappen oder auch nicht.

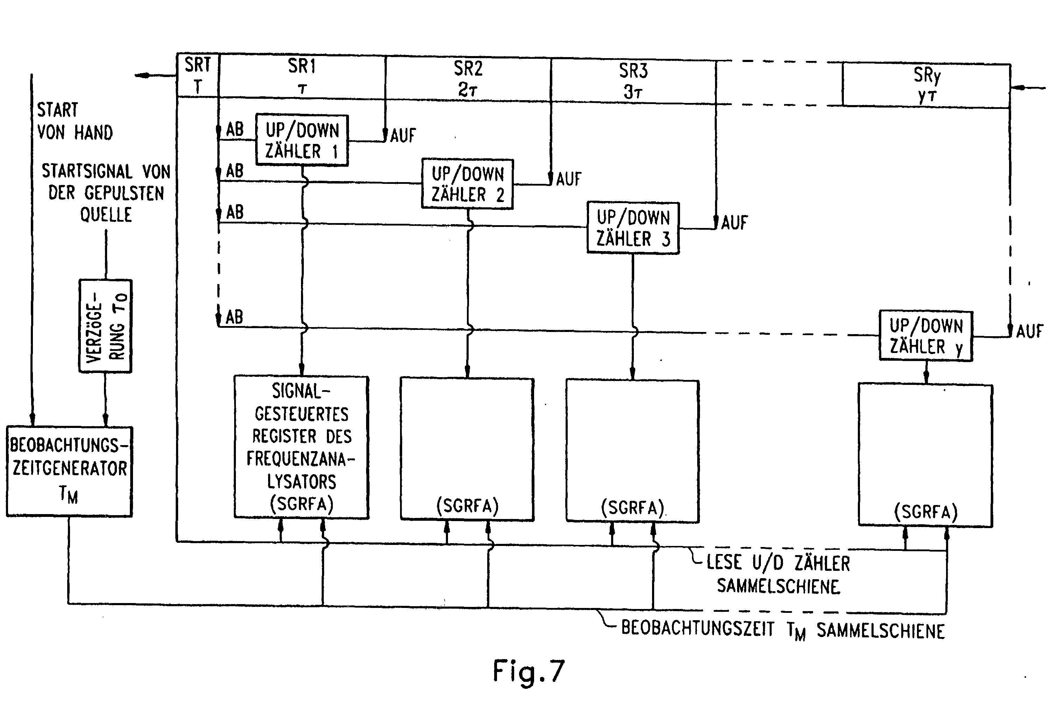

Fig.7 zeigt das Beispiel eines zweidimensionalen signalbedingten Frequenzanalysators. Jedes hier aus dem Schieberegister SRT austretende Signal bewirkt eine Registrierung der Zählerstände der Up/Down-Zähler in den jeweiligen Zählerregistern.

Durch eine Messung der Frequenzverteilung in mehreren unterschiedlichen Beobachtungsintervallen und in verschiedenen Zyklen nach jedem Neutronenquellpuls ist eine umfassende Analyse der Signalfolge möglich.

Zur Interpretation der Messungen wird zunächst die Wahrscheinlichkeit $f_k(\eta_1,\eta_2,\eta_3,\cdots\eta_k)d\eta_1 d\eta_2\cdots d\eta_k$ für die Registrierung von k Neutronensignalen in verschiedenen elementaren Zeitintervallen $[\eta_1,\eta_1 + d\eta_1]$, $[\eta_2,\eta_2 + d\eta_2]\cdots[\eta_k, \eta_k + d\eta_k]$ eingeführt. $f_1(\eta_1)d\eta_1$ ist die Wahrscheinlichkeit, ein Neutronensignal im Intervall $[\eta_1,\eta_1 + d\eta_1]$ vorzufinden. Es ist:

$$f_1(\eta_1)d\eta_1 = g_1(\eta_1)d\eta_1 \qquad\qquad (20)$$

Die Wahrscheinlichkeit zwei Neutronensignale vorzufinden, das Erste im Intervall $[\eta_1, \eta_1, + d\eta_1]$ und das Zweite im

$[\eta_2, \eta_2 + d\eta_2]$ mit $\eta_1 \leq \eta_2$, wird mit $f_2(\eta_1, \eta_2)d\eta_1 d\eta_2$ bezeichnet. Diese Wahrscheinlichkeit setzt sich zusammen aus $g_2(\eta_1, \eta_2)d\eta_1 d\eta_2$ und einer Wahrscheinlichkeit $g_1(\eta_1)d\eta_1\, g_1(\eta_2)d\eta_2\, g_2(\eta_1, \eta_2)d\eta_1 d\eta_2$ ist die Wahrscheinlichkeit zwei Neutronensignale einer einzigen Spaltung im Intervall $[\xi, \xi+d\xi]$ in den Intervallen $[\eta_1, \eta_1 + d\eta_1]$ und $[\eta_2, \eta_2 + d\eta_2]\cdot$zu messen mit $0 \leq \xi \leq \eta_1 \leq \eta_2$. Die Wahrscheinlichkeit, $g_1(\eta_1)d\eta_1\, g_1(\eta_2)d\eta_2$ zwei Signale in den gleichen Intervallen zu messen, kommt dagegen von zwei voneinander unabhängigen Spaltungen, einer im Intervall $[\xi, \xi_1 + d\xi_1]$ und einer anderen im Intervall $[\xi_2, \xi_2 + d\xi_2]$. Hierfür gilt: $0 \leq \xi_1 \leq \eta_1;\cdot 0 \leq \xi_1 \leq \xi_2 \leq \eta_2$ und $\eta_1 \leq \eta_2$ Es ist damit:

$$f_2(\eta_1, \eta_2)d\eta_1 d\eta_2 = [g_2(\eta_1, \eta_2) + g_1(\eta_1)g_1(\eta_2)]d\eta_1 d\eta_2 \qquad (21)$$

Mit ähnlichen Argumenten kann man den folgenden Ausdruck für die Wahrscheinlichkeit von drei Neutronensignalen in den Intervallen $[\eta_1, \eta_1 + d\eta_1]$, $[\eta_2, \eta_2 + d\eta_2]$ und $[\eta_3, \eta_3 + d\eta_3]$ angeben. Es ist:

$$f_3(\eta_1, \eta_2, \eta_3)d\eta_1 d\eta_2 d\eta_3 = [g_3(\eta_1, \eta_2, \eta_3) + g_2(\eta_1, \eta_2)g_1(\eta_3)$$

$$+ g_2(\eta_2, \eta_3)g_1(\eta_1)$$

$$+ g_2(\eta_3, \eta_1)g_1(\eta_2)$$

$$+ g_1(\eta_1)g_1(\eta_2)g_1(\eta_3)]d\eta_1 d\eta_2 d\eta_3 \qquad (22)$$

Es kann gezeigt werden dass, die Wahrscheinlichkeit $f_k(\eta_1, \eta_2, \eta_3, \cdots \eta_k)d\eta_1 d\eta_2 \cdots d\eta_k$ auch als Erwartungswert für ein Neutronensignal in jedem der k Elementarintervalle $[\eta_k, \eta_k + d\eta_k]$; $k = 1, 2, 3, \cdots$ verstanden werden kann und unabhängig ist von der Zahl der Signale außerhalb dieser Intervalle (Siehe zum Beispiel das Buch: Nonelinear Transformations of Stochastic Processes J.Wise and D.C. Cooper Eds. Pergamon Press (1965) Seite 101).

Im Folgenden wird zunächst die Größe $g_1(\xi_1, \eta_1)$ bestimmt. Nach Gleichung (9) ist die Zahl der emittierten Einzelneutronen im Intervall $[\xi_1, \xi_1 + d\xi_1]$:

$$S_{(1)}(\xi_1)d\xi_1 = S_{(1)}(0)e^{-\Lambda \xi_1}d\xi_1 \qquad (23)$$

Die Wahrscheinlichkeit, dass ein Teil dieser Neutronen in der Spaltneutronenzählanlage zum Zeitpunkt $\eta_1$ als thermische Neutronen existieren, ist:

$$e^{-\lambda(\eta_1 - \xi_1)} \qquad (24)$$

Die Wahrscheinlichkeit, dass diese Neutronen auch im Intervall $[\eta_1, \eta_1 + d\eta_1]$ von einem Neutronendetektor der Spaltneutronenzählanlage absorbiert wird, ist:

$$\varepsilon \lambda d\eta_1 \qquad (25)$$

Hierbei wurde die Zeit zur Abbremsung der schnellen Spaltneutronen im Moderator der Spaltneutronenzählanlage vernachlässigt. $1/\lambda$ ist die mittlere Lebensdauer der thermischen Neutronen in der Spaltneutronenzählanlage. Mit $\varepsilon$ wird die Wahrscheinlichkeit bezeichnet, mit der ein von der Probe emittiertes Spaltneutron in der Spaltneutronenzählanlage gemessen wird. Das Produkt der drei Wahrscheinlichkeiten gibt die Zahl der Einzelneutronen, die im Intervall $[\xi_1, \xi_1 + d\xi_1]$ nach einem Neutronenquellpuls geboren wurden und im Zeitintervall $[\eta_1, \eta_1 + d\eta_1]$ auch gemessen werden. Diese Größe wird mit $g_1(\xi_1, \eta_1)d\xi_1 d\eta_1$ bezeichnet. Es ist:

$$g_1(\xi_1, \eta_1)d\xi_1 d\eta_1 = S_{(1)}(0)e^{-\Lambda \xi_1}e^{-\lambda(\eta_1 - \xi_1)}\varepsilon \lambda d\eta_1 d\xi_1 \qquad (26)$$

Da alle induzierten Spaltungen in der Probe von $0 \leq \xi_1 \leq \eta_1$ zur Zahl der in $[\eta_1, \eta_1 + d\eta_1]$ regisrierten Einzelneutronensignale beitragen, muß $g_1(\xi_1, \eta_1)$ über alle Beiträge von $\xi_1$ bis $\eta_1$ integriert werden. Damit wird:

$$g_1(\eta_1)d\eta_1 = S_{(1)}(0)\varepsilon\lambda d\eta_1 e^{-\lambda\eta_1} \int_0^{\eta_1} e^{\xi_1(\lambda-\Lambda)}d\xi_1$$

$$g_1(\eta_1)d\eta_1 = S_{(1)}(0)\varepsilon d\eta_1 \frac{\lambda}{\lambda-\Lambda}\left[e^{-\Lambda\eta_1} - e^{-\lambda\eta_1}\right] \tag{27}$$

Diese Integration ist der entscheidende theoretische Schritt, der notwendig ist, "induzierte Spaltungen" mit Spaltneutronen zu korrelieren.

Da die Neutronensignalmessung nach einer Wartezeit $\tau_0$ erst beginnt, kann man für die Zeiten $\tau_0 \leq \eta_1$ die Gleichung (27) durch folgenden Ausdruck ersetzen:

$$g_1(\eta_1)d\eta_1 = S_{(1)}(0)\varepsilon\frac{\lambda}{\lambda-\Lambda}e^{-\Lambda\eta_1}d\eta_1$$

$$\text{und } \lambda\tau_0 \rangle\rangle 1 \tag{28}$$

Mit ähnlichen Argumenten findet man $g_2(\eta_1,\eta_2)$ und $g_3(\eta_1,\eta_2,\eta_3)$. Es ist:

$$g_2(\eta_1,\eta_2)=S_{(2)}(0)\varepsilon^2\frac{2!\lambda^2}{2\lambda-\Lambda}e^{-\Lambda\eta_1}e^{-\lambda(\eta_2-\eta_1)} \tag{29}$$

$$g_3(\eta_1,\eta_2,\eta 3)=S_{(3)}(0)\varepsilon^3\frac{3!\lambda^3}{3\lambda-\Lambda}e^{-\Lambda\eta_1}e^{-\lambda(\eta_3+\eta_2-2\eta_1)} \qquad \tau_0 \leq \eta_1 \leq \eta_2 \leq \eta_3 \tag{30}$$

Die Dichtefunktionen $f_k(\eta_1,\eta_2\eta_3,\cdots\eta_k)$ wurden zur Darstellung der eindimensionalen "Charakteristischen Funktion" $\varphi(u)$ bereits benutzt. Es ist:

$$\varphi(u) = E\{e^{iu\upsilon}\} = \sum_{n=0}^{\infty}p_n(\tau)e^{in\upsilon} = \sum_{n=0}^{\infty}p_n(\tau)z^n, z = e^{iu} \tag{31}$$

$$\varphi(z) = \sum_{k=0}^{\infty}\frac{(z-1)^k}{k!}F_k \tag{32}$$

$$F_k = k!\int_{\tau_0+(\upsilon-1)\tau}^{\tau_0+\upsilon\tau}d\eta_1\int_{\eta_1}^{\tau_0+\upsilon\tau}d\eta_2\cdots\int_{\eta_{k-1}}^{\tau_0+\upsilon\tau}f_k(\eta_1,\eta_2,\cdots\eta_k)d\eta_k \tag{33}$$

Die normalisierte k-te Ableitung der charakteristischen Funktion der Gleichung (31) ergibt sowohl den Erwartungswert $m_{(k)}(\upsilon,\tau)$ der Ordnung k, als auch die Wahrscheinlichkeit $p_{(k)}(\upsilon,\tau)$ für k Signale im $\upsilon$-ten Beobachtungsintervall.

$$m_{(k)}(\nu,\tau) = \frac{1}{k!}\left[\frac{\partial^k \varphi(z)}{\partial z^k}\right]_{z=1} \tag{34}$$

$$p_k(\nu,\tau) = \frac{1}{k!}\left[\frac{\partial^k \varphi(z)}{\partial z^k}\right]_{z=0} \tag{35}$$

Die Anwendung dieser Gesetze führt im Fall periodischer Beobachtungsintervalle $[\tau_0, \tau_0 + \tau], [\tau_0 + \tau, \tau_0 + 2\tau]$, $\cdots[\tau_0 + (\nu-1)\tau, \tau_0 + \nu\tau]$ zu folgenden Ausdrücken:

$$m_{(1)}(\nu,\tau) = \sum_{\mu=1}^{\infty}\binom{\mu}{1}p_\mu(\nu,\tau) = F_1 = S_{(1)}(0)\frac{\varepsilon\lambda}{\Lambda(\lambda-\Lambda)}e^{-\Lambda\tau_0}e^{-\Lambda(\nu-1)\tau}(1-e^{-\Lambda\tau}) \tag{36}$$

$$m_{(1)}(\nu,\tau) = S_{(1)}(0)\varepsilon\tau\omega_{11}(\nu,\tau) \tag{37}$$

$$\omega_{11}(\nu,\tau) = \frac{\lambda}{\Lambda(\lambda-\Lambda)\tau}e^{-\Lambda\tau_0}e^{-\Lambda(\nu-1)\tau}(1-e^{-\Lambda\tau}) \tag{38}$$

$$m_{(2)}(\nu,\tau) = \sum_{\mu=2}^{\infty}\binom{\mu}{2}p_\mu(\nu,\tau) = F_2 \tag{39}$$

$$m_{(2)}(\nu,\tau) = S_{(2)}(0)\varepsilon^2\tau\omega_{21}(\nu,\tau) + \frac{1}{2}S_{(1)}^2(0)\varepsilon^2\tau^2\omega_{22}(\nu,\tau) \tag{40}$$

$$\omega_{21}(\nu,\tau) = \frac{2!\lambda}{(\lambda-\Lambda)(2\lambda-\Lambda)\tau}e^{-\Lambda\tau_0}e^{-\Lambda(\nu-1)\tau}\left[\frac{\lambda}{\Lambda}(1-e^{-\Lambda\tau})-(1-e^{-\lambda\tau})\right] \tag{41}$$

$$\omega_{22}(\nu,\tau) = \omega_{11}^2(\nu,\tau) \tag{41}$$

$$m_{(3)}(\nu,\tau) = \sum_{\mu=3}^{\infty}\binom{\mu}{3}p_\mu(\nu,\tau) = F_3 \tag{43}$$

$$m_{(3)}(\nu,\tau) = S_{(3)}(0)\varepsilon^3\tau\omega_{31}(\nu,\tau) + S_{(2)}(0)S_{(1)}(0)\varepsilon^3\tau^2\omega_{32}(\nu,\tau) + \frac{1}{3!}S_{(1)}^3(0)\varepsilon^3\tau^3\omega_{33}(\nu,\tau) \tag{44}$$

$$\omega_{31}(\nu,\tau) = \frac{3!\lambda}{2(3\lambda - \Lambda)} e^{-\Lambda\tau_0} e^{-\Lambda(\nu-1)\tau} \times$$

$$\left[ \frac{1}{\Lambda\tau}(1 - e^{-\Lambda\tau}) + \frac{1}{(2\lambda - \Lambda)\tau}(e^{-\Lambda\tau} - e^{-2\lambda\tau}) - \frac{2}{(\lambda - \Lambda)\tau}(e^{-\Lambda\tau} - e^{-\lambda\tau}) \right] \qquad (45)$$

$$\omega_{32}(\nu,\tau) = \frac{\lambda^2}{(\lambda - \Lambda)^2(2\lambda - \Lambda)\Lambda\tau^2} e^{-2\Lambda\tau_0} e^{-2\Lambda(\nu-1)\tau} \times$$

$$\left[ \frac{2\lambda - \Lambda}{\Lambda}(1 - e^{-\Lambda\tau})^2 + 2e^{-\lambda\tau}(1 - e^{-\Lambda\tau}) - (1 - e^{-2\lambda\tau}) \right] \qquad (46)$$

$$\omega_{32}(\nu,\tau) = \omega_{21}(\nu,\tau)\omega_{11}(\nu,\tau) \qquad (47)$$

$$\omega_{33}(\nu,\tau) = \omega_{11}^3(\nu,\tau) \qquad (48)$$

Die Periode $T_p$ der Quellimpulse muß so sein, dass folgende Bedingung eingehalten wird:

$$1 \gg e^{-\Lambda T_p} \qquad (49)$$

Damit gibt es keine Überlagerung der Neutronenbevölkerung in der Messkammer von einer Quellperiode der gepulsten Quelle zur nächsten. Für A→0 ergibt sich der Fall von Korrelationsmessungen mit Spontanspaltmaterial.
Die Wahrscheinlichkeiten $p_k(\nu,\tau)$, k =0,1,2,···μ führen zu wesentlich umfangreicheren Ausdrücken, die eine numerische Auswertung erschweren. Es ist:

$$p_0(\nu,\tau) = 1 + \sum_{k=1}^{\infty} (-1)^k m_{(k)}(\nu,\tau) \qquad (50)$$

$$p_1(\nu,\tau) = \sum_{k=1}^{\infty} (-1)^{k-1} \binom{k}{1} m_{(k)}(\nu,\tau) \qquad (51)$$

$$p_2(\nu,\tau) = \sum_{k=2}^{\infty} (-1)^{k-2} \binom{k}{2} m_{(k)}(\nu,\tau) \qquad (52)$$

$$p_\mu(\nu,\tau) = \sum_{k=\mu}^{\infty} (-1)^{k-\mu} \binom{k}{\mu} m_{(k)}(\nu,\tau) \tag{53}$$

In ähnlicher Weise kann man die entsprechenden theoretischen Ausdrücke für die faktoriellen Momente $m_{(1,k)}$ $(\nu,\tau,T_M)$ und der Wahrscheinlichkeiten $q_{1,k}(\nu,\tau,T_M)$ herleiten, unter Verwendung einer charakteristischen Funktion für mehrere Zufallsvariablen, die in dem Aufsatz von W.Hage und D.M.Ciffarelli in der Fachzeitschrift Nucl.Sci.Eng., 112,136 (1992) angegebenen ist. In der Struktur ergeben sich ähnliche Beziehungen, jedoch mit anderen Funktionen für die zeitabhängigen Variablen.

Die physikalischen Bedingungen können eine Verfeinerung der Methode nötig machen. Diese Verfeinerung betrifft:

1. Die Berücksichtigung der Dauer des Neutronenquellpulses,
2. die Berücksichtigung der Neutronerumultiplikation schneller Neutronen in der Probe bei nicht fein verteiltem Spaltmaterial,
3. eine Annäherung des zeitlichen Verlaufs des Neutronenflusses in der Messkammer durch mehrere Exponentialfunktionen:

$$\Phi(\xi) = \Phi_0 \sum_{i=1}^{I} a_i e^{-\Lambda_i \xi} \tag{54}$$

$$\text{Mit:} \sum_{i=1}^{I} a_i = 1$$

Dies wird notwendig bei der Messung von Abfallfässern mit Spaltmaterial, das in stark Neutronen absorbierenden und moderierenden Abfällen eingelagert ist,
4. die Berücksichtigung von mehreren Exponentialfunktionen in den Ausdrücken für $g_k$ ($\eta_1, \eta_2, \eta_3, \cdots \eta_k$), was besonders wichtig ist, falls die Neutronendetektoren der Spaltneutronenzählanlage in verschiedenen Abständen von der Messkammer angeordnet sind, um eine möglichst hohe Neutronenansprechwahrscheinlichkeit $\varepsilon$ zu erreichen,
5. die Berücksichtigung von Neutronenzählrohrtotzeiten,
6. die Verkürzung der Neutronenquellimpulsperioden, so dass sich die Neutronenbevölkerung von einem Quellpuls zum nächsten überlagern. Dies bewirkt eine Reduktion der Messzeit.

Die wesentlichen Elemente einer Interpretation der Messwerte werden am Beispiel der Gleichungen (36), (40) und (44) erläutert. Durch Gleich setzen der durch eine Messung erhaltenen faktoriellen Momente $m_{(k)}^+(\nu,\tau)$ der Frequenzverteilung mit den entsprechenden Erwartungswerten $m_{(k)}(\nu,\tau)$, erhält man folgende 3 Gleichungen:

$$m_{(1)}(\nu,\tau) = S_{(1)}(0)\varepsilon\tau\omega_{11}(\nu,\tau) \tag{55}$$

$$m_{(2)}(\nu,\tau) = S_{(2)}(0)\varepsilon^2\tau\omega_{21}(\nu,\tau) + \frac{1}{2}S_{(1)}^2(0)\varepsilon^2\tau^2\omega_{22}(\nu,\tau) \tag{56}$$

$$m_{(3)}(\nu,\tau) = S_{(3)}(0)\varepsilon^3\tau\omega_{31}(\nu,\tau) + S_{(2)}(0)S_{(1)}(0)\varepsilon^3\tau^2\omega_{32}(\nu,\tau) + \frac{-1}{3!}S_{(1)}^3(0)\varepsilon^3\tau^3\omega_{33}(\nu,\tau) \tag{57}$$

Die Zahl der im $\nu$-ten Intervall registrierten Einzelsignale $m_{(1)}(\nu,\tau)$ ist proportional dem Neutronenfluss $\Phi_0$ in der Messkammer.

Die Zahl der im $\nu$-ten Intervall gespeicherten Neutronensignalpaare besteht nach der Gleichung (56) aus zwei Teilen. Der erste Teil beschreibt die Zahl der zu einer Spaltung gehörenden Neutronensignalpaare ("Korrelierte Paare") und ist nach Gleichung (7) proportional dem Neutronenfluss in der Messkammer und proportional der Masse des Spaltmaterials. Der zweite Teil repräsentiert Neutronensignalpaare, die jeweils von zwei verschiedenen Spaltungen ("Unkorrelierte Paare") kommen. Diese unkorrelierten Paare sind proportional dem Quadrat des Neutronenflusses in der Messkammer und dem Quadrat der Masse des Spaltmaterials.

Die Zahl der im v-ten Intervall gespeicherten Tripletts setzt sich aus drei Teilen zusammen: Den korrelierten Tripletts, die dem Neutronenfluss und der Masse proportional sind, Singletts kombiniert mit korrelierten Paaren, die dem Quadrat von Neutronenfluss und Spaltmasse proportional sind, und drei Singletts, die der dritten Potenz von Neutronenfluss und Spaltmasse proportional sind.

Da die unkorrelierten Paare und Tripletts mindestens mit dem Quadrat des durch die gepulste Neutronenquelle erzeugten Flusses in der Messkammer ansteigen, ist es bei einer Korrelationsmessung notwendig, die Quellstärke pro Neutronenimpuls der zu messenden Spaltmaterialmasse anzupassen. Wenn man nur mit großer Quellstärke mißt, kann es sein, dass die Zahl der gemessenen korrelierten Paare und Tripletts durch unkorrelierte Ereignisse überdeckt werden. Tabelle 1 gibt für einen typischen Fall die zu erwartende Ereigniszahl [1/sg] an Singletts, korrelierten Paaren, unkorrelierten Paaren, korrelierten Tripletts, korrelierten Paaren kombiniert mit Singletts und Tripletts hervorgerufen durch Singletts. Ein Absenken der Quellstärke der Neutronenquelle um einen Faktor 2, reduziert in der Tabelle 1 die Werte der Spalte 1, 2 und 4 um den Faktor 2, die der Spalte 3 und 5 um den Faktor 4 und den Wert der Spalte 6 um den Faktor 8. Die gleichen Verhältnisse ergeben sich, wenn man die Masse des Spaltmaterials um die Hälfte reduziert. Deshalb muß vor jeder Korrelationsmessung in einer Vormessung und einer groben Abschätzung der Masse des Spaltmaterials der für eine Korrelationsmessung geeignete Bereich für die Quellstärke der gepulsten Quelle bestimmt werden.

Die Gleichungen (55) bis (57) können auch zur Interpretation von "Passiven Neutronenkorrelationsmessungen" benutzt werden. In einem solchen Fall ist in den Ausdrücken für $\omega_{11}$, $\omega_{21}$, $\omega_{22}$, $\omega_{31}$, $\omega_{32}$ und $\omega_{33}$ der Wert für $\Lambda$ gleich Null zu setzen. $S_{(1)}(0)$ ist dann die Quellstärke für Einzelneutronen, $S_{(2)}(0)$ die für Paar- und $S_{(3)}(0)$ die für Dreifachneutronenemission. Sie errechnet sich für spontanspaltende Isotope in bekannter Weise aus der Halbwertszeit für Spontanspaltung, der Masse und der bekannten Wahrscheinlichkeitsverteilung $P_{Sv}$ für die Emission von $v$ Neutronen pro Spaltung. Einzelneutronenemission kann auch in Form von $(\alpha,n)$-Reaktionen auftreten. Im Falle, dass schnelle Neutronenmultiplikation der $(\alpha,n)$-Neutronen nicht vernachlässigt werden kann, tragen auch diese zu den höheren Quelltermen $S_{(k)}(0)$ k>1 in bekannter Weise bei.

Die Messung des Spaltmaterials erfolgt in 3 Stufen und einer zusätzlichen Eichstufe. In Stufe 1 wird der Untergrund, hervorgerufen durch die Kollisionen der kosmischen Strahlung mit den Atomen der Erdathmosphäre und der die Messkammer umgebenden Materie sowie von stationären Neutronenquellen, gemessen. Diese Messung wird ohne Spaltstoffprobe in der Messkammer durchgeführt. Der Generator für die Erzeugung der Beobachtungsintervalle der Frequenzanalysatoren wird in diesem Fall direkt angesteuert ohne eine Verzögerung $\tau_0$. Dieser Generator erlaubt die Messung von $N_c$ Zyklen für $v = 1,2,3,\cdots$ aufeinanderfolgende Beobachtungsintervalle $\tau$. Dadurch wird die Frequenzverteilung der kosmischen Strahlung und anderer stationärer Quellen während einer Messzeit $T_{Mc}$ bestimmt.

$$T_{Mc} = N_c v \tau \qquad (58)$$

In Stufe 2 wird die zu messende Probe in die Messkammer eingeführt, und das gleiche Messverfahren wie in Stufe 1 wiederholt. Die nun erhaltene Frequenzverteilung hat als Ursache wieder Neutronen, die durch kosmische Strahlung erzeugt werden, und zusätzlich Neutronen, die durch Spontanspaltungen in $^{238}$U, $^{238}$Pu, $^{240}$Pu und $^{242}$Pu entstehen. Der kosmische Strahlungsuntergrund der Probe kann sich erhöhen, falls das Abfallgebinde einen grossen Anteil an Metallen besitzt.

Aus den Momenten der Frequenzverteilungen von Stufe 1 und 2 kann man nach bekannten Verfahren die Zahl der gemessenen Einzelsignale, der korrelierten Signalpaare und Signaltripletts bestimmen. Nach dem Abzug der korrelierten Untergrundmultipletts der Ordnung k, (k = 1,2,3$\cdots$) der Stufe 1 von den korrelierten Multipletts gleicher Ordnung der Stufe 2 erhält man die Zahl der Einzelsignale, der korrelierten Paare und Tripletts, die die Spontanspaltquelle näher beschreiben. Dies führt zu 3 voneinander unabhängigen Gleichungen. Nach bekannten analytischen Verfahren kann die Ansprechwahrscheinlichkeit $\varepsilon$ der Spaltneutronenzählanlage, die $^{240}$Pu-equivalente Masse und die $(\alpha,n)$-Reaktionsrate bestimmt werden. Bei kleinen kompakten Proben ist $\varepsilon$ bekannt. In einem solchen Fall kann die $^{240}$Pu-equivalente Masse, die $(\alpha,n)$-Reaktionsrate und die Wahrscheinlichkeit p, dass ein Neutron in der Probe eine Schnellspaltung verursacht, berechnet werden. Im Fall eines bekannten Verhältnisses der $(\alpha,n)$-Reaktionsrate zur Spontanspaltemissionsrate von Einzelneutronen kann $\varepsilon$, p und die $^{240}$Pu-equvivalente Masse errechnet werden.

In Stufe 3, in der die erfindungsgemässe Methode angewandt wird, wird die Probe in der Messkammer mit der gepulsten Neutronenquelle bestrahlt. Die Messung der Frequenzverteilung der Spaltneutronensignale, die im Spaltneutronenzähler erzeugt werden, und des zeitlichen Verlaufes des Neutronenflusses in der Messkammer wird von dem Signal zur Pulsung der Neutronenquelle gesteuert. Hierbei ist darauf zu achten, dass die Zeitskala der Frequenzmessung exakt mit der Messung des zeitlichen Verlaufes des thermischen Neutronenflusses in der Messkammer übereinstimmt.

Im ersten Abschnitt der Messung erfolgt zunächst bei hoher gepulster Quellstärke eine Frequenzmessung nach jedem Quellpuls in den Intervallen $v = 1, 2, 3, \cdots$. Nach einer genügenden Zahl von Quellpulsen ergeben sich die Beobachtungswerte für Singletts, für Paare und für Tripletts. Falls die Quellstärke der gepulsten Quelle für die Spaltmasse der Probe in der Messkammer zu hoch war, können die korrelierten Paare und Tripletts nicht mittels der Gleichungen (57) und (58) oder equivalenter Ausdrücke bestimmt werden, da sich numerisch folgende Relationen ergeben:

$$m^+_{(2)}(v,\tau) \approx \frac{1}{2} m^{+2}_{\;(1)}(v,\tau) \tag{59}$$

$$m^+_{(3)}(v,\tau) \approx \frac{1}{3!} m^{+3}_{(1)}(v,\tau) \tag{60}$$

Die Spaltquellrate für Einzelneutronen $S_{(1)}(0)$ kann dann mit einem Schätzwert von $\varepsilon$ ermittelt werden. Es ist dann:

$$S_{(1)}(0) \approx \frac{m^+_{(1)}(v,\tau)}{\varepsilon \tau \omega_{11}(v,\tau)} \tag{61}$$

Mittels der Gleichungen (56) und (57) oder equivalenter Ausdrücke kann dann eine geeignete Quellstärke der gepulsten Quelle berechnet werden, die eine numerische Bestimmung von $S_{(1)}(0)$, $S_{(2)}(0)$, und $S_{(3)}(0)$ gestattet, unter erneuter Verwendung der Gleichungen (55), (56) und (57). Die eigentliche Messung der Probe mit korrekter Quellstärke kann dann erfolgen.

Um die Größen $S_{(1)}(0)\,\varepsilon$, $S_{(2)}(0)\,\varepsilon^2$ und $S_{(3)}(0)\,\varepsilon^3$ aus den gemessenen Multipletts zu bestimmen, müssen noch wie bei der passiven Neutronenkorrelationstechnik die entsprechenden Untergrundwerte der Messstufe 2 in der Form von $S_{(1)}(B)\,\varepsilon$, $S_{(2)}(B)\varepsilon^2$ und $S_{(3)}(B)\varepsilon^3$ abgezogen werden (Variable B bedeutet Untergrund). Nach der Untergrundkorrektur werden die Emissionsraten der Neutronenmultipletts $S_{(1)}(0)$, $S_{(2)}(0)$ und $S_{(3)}(0)$ auf eine Standardquellstärke normiert.

Die Eichung des thermischen Neutronenflusses $\Phi_0$ in der Messkammer erfolgt am besten mit einer bekannten Spaltmaterialmasse und einer wie in Stufe 3 bestimmten Quellstärke der gepulsten Quelle. Die Auswertung der Messung ergibt Referenzwerte für $S_{(1)}(R)\varepsilon_R$, $S_{(2)}(R)\varepsilon_R^2$ und $S_{(3)}(R)\varepsilon_R^3$ der bekannten Probe. Diese müssen noch durch die Untergrundmultipletts $S_{(1)}(B)\varepsilon_R$, $S_{(2)}(B)\varepsilon_R^2$ und $S_{(3)}(B)\varepsilon_R^3$ korrigiert und auf die Standardneutronenquellstärke normiert werden. Die so korrigierten Verhältniswerte

$$\frac{S_{(1)}(0)}{S_{(1)}(R)}; \quad \frac{S_{(2)}(0)}{S_{(2)}(R)}; \quad \frac{S_{(3)}(0)}{S_{(3)}(R)}; \tag{62}$$

führen zu drei voneinander unabhängigen Gleichungen. Damit kann beispielsweise bei einer gemischten Uran und Plutonium Probe, die Spaltmasse von $^{235}$U, das Massenverhältnis $^{235}$U / $^{239}$Pu -equivalent und die Ansprechwahrscheinlichkeit $\varepsilon$ für Neutronen errechnet werden.

TABELLE 1.

| SPEZIFISCHE ZÄHLRATE VON KORRELIERTEN UND UNKORRELIERTEN BEITRÄGEN ZU SIGNALSINGLETTS, DUBLETS UND TRIPLETS. | | | | | | |
|---|---|---|---|---|---|---|
| SPALTE | 1 | 2 | 3 | 4 | 5 | 6 |
| $\tau$ ($\mu$s) | $N_{(1)}(1,T_M)$ (sg)$^{-1}$ | $N_{(2)}(2,T_M)$ (sg)$^{-1}$ | $N_{(2)}(1,1,T_M)$ (sg)$^{-1}$ | $N_{(3)}(3,T_M)$ (sg)$^{-1}$ | $N_{(3)}(2,1,T_M)$ (sg)$^{-1}$ | $N_{(3)}(1,1,1,T_M)$ (sg)$^{-1}$ |
| 10 | 315.1 | 3.422 | 5.371 | 0.0251 | 0.1167 | 0.0653 |
| 20 | 315.1 | 6.338 | 10.742 | 0.0845 | 0.4322 | 0.2615 |
| 40 | 315.1 | 10.972 | 21.483 | 0.2447 | 0.1.4961 | 1.0458 |

# EP 0 873 524 B1

TABELLE 1. (fortgesetzt)

| SPEZIFISCHE ZÄHLRATE VON KORRELIERTEN UND UNKORRELIERTEN BEITRÄGEN ZU SIGNALSINGLETTS, DUBLETS UND TRIPLETS. | | | | | | |
|---|---|---|---|---|---|---|
| SPALTE | 1 | 2 | 3 | 4 | 5 | 6 |
| $\tau$ ($\mu$s) | $N_{(1)}(1,T_M)$ $(sg)^{-1}$ | $N_{(2)}(2,T_M)$ $(sg)^{-1}$ | $N_{(2)}(1,1,T_M)$ $(sg)^{-1}$ | $N_{(3)}(3,T_M)$ $(sg)^{-1}$ | $N_{(3)}(2,1,T_M)$ $(sg)^{-1}$ | $N_{(3)}(1,1,1,T_M)$ $(sg)^{-1}$ |
| 50 | 315.1 | 12.816 | 26.852 | 0.3289 | 2.1842 | 1.6338 |
| 100 | 315.1 | 18.974 | 53.671 | 0.6813 | 6.4637 | 6.5229 |
| 200 | 315.1 | 24.123 | 107.075 | 1.0377 | 16.3944 | 25.8976 |
| 500 | 315.1 | 27.754 | 263.121 | 1.3035 | 46.3501 | 153.8260 |
| $1/\lambda$=50$\mu$s; $1/\Lambda$=1000$\mu$s; $\tau_0$=500$\mu$s; $T_M$=1000$\mu$s; $\varepsilon$=0.1; $\Phi_0$=2.2 $10^4$ n/cm$^2$s Spaltstoff: 1g $^{235}$U; Anzahl der Messryklen: $\nu$=$T_M/\tau$ | | | | | | |

## Patentansprüche

1. Methode zur quantitativen zerstörungsfreien Bestimmung von Uran- und Plutoniumisotopen, die durch thermische Neutronen spaltbar sind, basierend auf induzierten Spaltungen durch eine gepulste Neutronenquelle unter Verwendung eines Messkopfes, bestehend aus einer Messkammer mit der gepulsten Neutronenquelle und einem Moderatormantel, einer diesen umgebenden Spaltneutronenzählanlage, bestehend aus Neutronenmoderator, Neutronenzählrohren und Neutronenfiltern sowie Registriereinrichtungen zur Messung des Neutronenflusses in der Messkammer, und zur Messung der relativen Neutronenquellstärke der gepulsten Quelle, wobei der die Messkammer umgebende Mantel aus Neutronen abbremsenden Substanzen und die Spaltneutronenzählanlage so dimensioniert sind, dass die mittlere Lebensdauer $1/\Lambda$ der durch die gepulste Quelle erzeugten Neutronen nach ihrer Abbremsung in der Messkammer wesentlich grösser ist als die Lebensdauer $1/\lambda$ der moderierten Spaltneutronen in der Spaltneutronenzählanlage, **dadurch gekennzeichnet, dass** die zeitliche Änderung der Emissionsrate von induzierten Spaltneutronen in der Messkammer durch Messung des zeitlichen Verlaufes des thermischen Neutronenflusses berechnet wird, wobei die Frequenzverteilungen der induzierten Spaltneutronen in periodisch geöffneten oder durch jedes Spaltneutronensignal geöffneten Beobachtungsintervallen nach jedem Puls der Quelle mit einer einstellbaren Verzögerungszeit in der Spaltneutronenzählanlage gemessen werden, dass die gepulste Neutronenquelle in ihrer Stärke so eingestellt wird, dass Neutronensignalpaare und Tripletts, die von einer Spaltung stammen, d.h. dukorrelierte Paare oder Tripletts, von Paaren und Tripletts, die von mehreren Spaltungen stammen, d.h. unkorrelierten Paaren und Tripletts, unterscheidbar werden, und dass für jedes Intervall durch Bildung der faktoriellen Momente erster, zweiter und dritter Ordnung der Frequenzverteilungen die Zahl der Einfachsignale, der Signalpaare und Dreifachsignale erhalten wird, wobei die Zahl der korrelierten Signalpaare aus der Zahl der Paarsignale vermindert um die Zahl der unkorrelierten Signalpaare, die aus der Zahl der Einfachsignale berechnet wird, sowie auch die Zahl der korrelierten Dreifachsignale, die aus der Zahl der Dreifachsignale vermindert um die Zahl der unkorrelierten Signalpaare und Einfachsignalen, die aus der Zahl der Einfach- und Paarsignale berechnet wird, sodass man für jeden Beobachtungsintervall drei Zahlenwerte für Einfachsignale, korrelierte Signalpaare und korrelierte Dreifachsignale erhält, die alle jeweils der Spaltmasse und der ersten, zweiten beziehungsweise dritten Potenz der Ansprechwahrscheinlichkeit $\varepsilon$ der Spaltneutronenzählanlage proportional sind, und dass daraus aus den ersten beiden Zahlen sowohl die Ansprechwahrscheinlichkeit $\varepsilon$ wie auch die Masse des Spaltmateriales bestimmt wird, wobei zur Massenbestimmung der Probe die Messdaten einer bekannten Referenzprobe für die korrelierten Signale aus einer anderen Messung benutzt werden.

2. Methode nach Anspruch 1, **dadurch gekennzeichnet, dass** vor oder nach der eigentlichen Messung der Probe in die Messkammer eine Referenzprobe aus bekannter Spaltstosmasse und Zusammensetzung eingesetzt wird, wobei die Frequenzverteilungen oder deren faktorielle Momente der Spaltneutronensignale gemessen werden und daraus die korrelierten Paare und Tripletts der Referenzprobe erhalten werden, so dass die Auswertung der Messmethode nach Anspruch vom Absolutwert des thermischen Neutronenflusses der thermalisierten Quellneutronen unabhängig wird.

3. Methode nach Anspruch 1, **dadurch gekennzeichnet, dass** vor oder nach der eigentlichen Messung der Probe in der Messkammer eine Referenzprobe mit bekannter Spaltstoffmasse und Zusammensetzung eingesetzt wird, die eine andere Quellstärke benötigt als die eigentliche Probe, wobei die Singletts sowie die korrelierten Paare und Tripletts der Spaltneutronensignale auf eine einheitliche Quellstärke normiert werden.

**4.** Methode nach einem der Ansprüche 1,2 und 3, **dadurch gekennzeichnet, dass** die Frequenzverteilungen der Spaltneutronensignale in periodisch geöffneten Beobachtungsintervallen gemessen werden.

**5.** Methode nach Anspruch 4 **dadurch gekennzeichnet, dass** die Frequenzverteilungen der Spaltneutronensignale in periodisch geöffneten Beobachtungsintervallen gleicher Dauer gemessen werden.

**6.** Methode nach einem der Ansprüche 1,2 und 3, **dadurch gekennzeichnet, dass** die Frequenzverteilungen der Spaltneutronensignale in durch jedes Spaltneutronensignal getriggerten Beobachtungsintervallen gemessen werden.

**7.** Methode nach Anspruch 6, **dadurch gekennzeichnet, dass** die Frequenzverteilungen der Spaltneutronensignale in durch jedes Spaltneutronensignal getriggerten Beobachtungsintervallen gleicher Dauer gemessen werden.

**Claims**

**1.** Method for the quantitative none-destructive determination of uranium and plutonium isotopes fissionable by thermal neutrons, based on induced fissions by a pulsed neutron source using a detector head, consisting of a measurement chamber with the pulsed neutron source and a moderator liner, surrounded by a fission neutron counting device, consisting of neutron moderator, neutron detectors and neutron filters as well as devices for the registration of the measured neutron fluxes in the measurement chamber, and for the measurement of the relative neutron output of the pulsed source, whereby the liner of the measurement chamber consisting of neutron moderating materials and the fission neutron counting device are dimensioned such that the mean lifetime $1/\Lambda$ of the neutrons produced by the pulsed source after their slowing down in the measurement chamber is much greater than the mean lifetime $1/\lambda$ of the moderated fission neutrons in the fission neutron counting device, such that the time dependence of the emission rate of the induced fission neutrons in the measurement chamber is determined from the measured time dependence of the thermal neutron flux, whereby the frequency distributions of the induced fission neutrons are measured in the fission neutron counting device inside periodically triggered inspection intervals or by each fission neutron signal triggered inspection intervals after each burst of the source with an adjustable delay, with the output of the pulsed source adjusted such that neutron signal pairs and triplets coming from single fission events, i.e. correlated pairs or triplets are distinguished from pairs and triplets coming from several fissions, i. e. uncorrelated pairs and triplets and that the number of single signals, signal pairs and signal triplets is determined for each interval forming the factorial moments of first, second and third order of the frequency distributions, whereby the number of correlated signal pairs is determined from the number of signal pairs subtracting the number of uncorrelated signal pairs, obtained from the number of single signals, as well as the number of correlated signal triplets, determined from the number of signal triplets subtracting the number of uncorrelated signal pairs and signal singlets, which are calculated from the number of signal singlets and signal pairs, such that three numerical values are obtained for the signal singlets, the correlated signal pairs and the correlated signal triplets for each inspection interval, which are all proportional to the fissile mass and proportional to the first, second and third power of the neutron detection probability $\varepsilon$ of the fission neutron counting device, respectively, and that with the first two numbers the detection probability $\varepsilon$, and the mass of the fissile material is determined, whereby for the determination of the mass the measurement data of the correlated signals of a different measurement from a known reference sample are used.

**2.** Method according to claim 1, **characterised by** the fact, that before or after a measurement of the test item in the measurement chamber a reference sample of known fissile mass and composition is inserted, whereby the frequency distributions or their factorial moments of the fission neutron signals are measured to obtain the correlated pairs and triplets of the reference sample, such that the data analysis of the measurement method according to claim 1 becomes independent from the absolute value of the thermal neutron flux of the thermalized source neutrons.

**3.** Method according to claim 1, **characterised by** the fact, that before or after a measurement of the test item in the measurement chamber a reference sample of known fissile mass and composition is inserted, requiring a different source output from the test sample, whereby the singlets, the correlated pairs and triplets of the fission neutron signals are normalised to a standard source output.

4. Method according to the claims 1, 2 and 3, **characterised by** the fact, that the frequency distributions of the fission neutron signals are measured in periodically triggered inspection intervals.

5. Method according to claim 4, **characterised by** the fact, that the frequency distributions of the fission neutron signals are measured in inspection intervals of equal duration.

6. Method according to the claims 1, 2 and 3, **characterised by** the fact, that the frequency distributions of the fission neutron signals are measured in inspection intervals triggered by each fission neutron signal.

7. Method according to the claim 6, **characterised by** the fact, that the frequency distributions of the fission neutron signals are measured in inspection intervals triggered by each fission neutron signal of equal duration.

**Revendications**

1. Procédé de détermination quantitative et non-destructive d'isotopes d'uranium et de plutonium fissiles par des neutrons thermiques, basée sur des fissions induites par une source pulsée de neutrons, en mettant en oeuvre une tête de mesure constituée d'une chambre de mesure comprenant ladite source pulsée de neutrons et une chemise modératrice, d'un dispositif de comptage de neutrons de fission consistant en un modérateur neutronique, en des tubes comptant les neutrons, des filtres neutroniques et des dispositifs d'enregistrement pour mesurer du flux de neutrons dans ladite chambre de mesure et pour mesurer la puissance relative du flux neutronique de ladite source pulsée, ladite chemise entourant la chambre de mesure et comprenant des substances pour ralentir des neutrons et le dispositif pour compter les neutrons de fission étant conçus de telle manière que la durée de vie moyenne $1/\Lambda$ des neutrons engendrés par la source pulsée après leur freinage dans la chambre de mesure soit nettement plus longue que la durée de vie $1/\lambda$ des neutrons de fission modérés dans ledit dispositif de comptage, **caractérisé en ce que** la variation temporelle du taux d'émission en neutrons de fission induits dans la chambre de mesure est calculée en mesurant l'évolution temporel du flux des neutrons thermiques, les distributions en fréquence des neutrons de fission induits étant mesurées dans le dispositif de comptage pendant des fenêtres d'observation qui interviennent périodiquement ou qui sont activées par chaque signal d'un neutron de fission, à la suite de chaque impulsion de la source avec un retard ajustable, que la source pulsée de neutrons est ajustée en puissance de telle sorte qu'on peut distinguer, d'une part, entre des paires et triplets de neutrons provenant d'une seule fission, donc des paires et triplets corrélés, et, d'autre part, des paires et triplets provenant de plusieurs fissions, donc des paires et triplets non corrélés, et qu'on obtient pour chaque fenêtre par la formation des moments factoriels de premier, deuxième et troisième ordre des distributions en fréquence le nombre des signaux simples, des signaux doubles et signaux triples, le nombre des paires de signaux corrélées étant déduit du nombre des signaux doubles diminué par le nombre de signaux doubles déduit du nombre des signaux simples, tout comme le nombre des signaux triples corrélés qui est déduit du nombre de signaux triples diminué par le nombre de paires de signaux non corrélés et les signaux simples déduits du nombre des signaux simples et doubles, de sorte qu'on obtient pour chaque fenêtre d'observation trois valeurs chiffrées pour les signaux simples, les paires corrélées de signaux et des triplets corrélés, qui sont tous proportionnels respectivement à la masse de fission et à la première, la deuxième et la troisième puissance de la probabilité $\varepsilon$ de réponse du dispositif de comptage, et qu'on dérive des deux premières valeurs tant ladite probabilité $\varepsilon$ de réponse que la masse de matériau fissible, les données d'un échantillon de référence provenant d'une autre mesure des signaux corrélés étant exploitées pour la détermination de la masse de l'échantillon.

2. Procédé selon la revendication 1, **caractérisé en ce qu'**on introduit dans la chambre de mesure avant ou après l'acte de mesure de l'échantillon proprement dit un échantillon de référence dont la masse de matière fissile et la composition sont connues et qu'on mesure les distributions en fréquence ou les moments factoriels des signaux des neutrons de fission et en déduit les paires et triplets corrélés pour cet échantillon de référence de sorte que le résultat selon le procédé conforme à la revendication 1 devienne indépendant de la valeur absolue du flux de neutrons thermiques des neutrons thermalisés de la source.

3. Procédé selon la revendication 1, **caractérisé en ce qu'**on introduit dans la chambre de mesure avant ou après l'acte de mesure de l'échantillon proprement dit un échantillon de référence dont la masse de matière fissile et la composition sont connues, qui exige une autre puissance de la source que l'échantillon inconnu, les paires et triplets corrélés des signaux des neutrons de fission étant ajustés sur une puissance commune de la source.

4. Procédé selon l'une des revendications 1, 2 et 3, **caractérisé en ce que** la distribution en fréquence des signaux des neutrons de fission est mesurée dans des fenêtres périodiques d'observation.

5. Procédé selon la revendication 4, **caractérisé en ce que** la distribution en fréquence des signaux des neutrons de fission est mesurée dans des fenêtres périodiques d'observation de durée égale.

6. Procédé selon l'une des revendications 1, 2 et 3, **caractérisé en ce que** la distribution en fréquence des signaux des neutrons de fission est mesurée dans des fenêtres d'observation définies par chacun des signaux de neutrons de fission.

7. Procédé selon la revendication 6, **caractérisé en ce que** la distribution en fréquence des signaux de neutrons de fission est mesurée dans des fenêtres d'observation de durée égale définies par chacun des signaux de neutrons de fission.

Fig.1

LOGARITHMUS DER SCHNELLEN FLUSSVERTEILUNG IN DER PROBE

10

5 μs

ZEIT

∼ 1ms

LOGARITHMUS DER THERMISCHEN FLUSSVERTEILUNG IN DER PROBE

$T_p$

11

$e^{-\Lambda\xi}$

$1/\Lambda \approx 200-1200\,\mu s$

12

13

$\xi_1$

ZEIT $\xi$

$\xi_2$

∼ 1ms

LOGARITHMUS DER WAHRSCHEINLICH-KEIT FÜR DIE REGISTRIERUNG EINES NEUTRONS

$e^{-\lambda(\eta_2-\xi_2)}$

$e^{-\lambda(\eta_1-\xi_1)}$

$1/\lambda \approx 20-100\,\mu s$

$\eta_1$

$\eta_2$

∼ 1ms

ZEIT $\eta$

Fig.2

20

VERZÖGE-RUNG $\nu_1$

VIELFACH-ZÄHLER-ANLAGE

RECHNER

SPALTVERLAUFSZÄHLER

M

A  A  A

VERZÖGE-RUNG $T_0$

FREQUENZ ANALYSATOREN

SPALTNEUTRONENZÄHLANLAGE

M

A  A  A

STARTSIGNAL VON DER GEPULSTEN QUELLE

QUELLNORMIERUNGSZÄHLER

VERZÖGE-RUNG $\nu_2$

ZÄHLER

A

$^3$He-ZÄHLROHRE

A ≡ ANALOGZÄHLKETTE          M ≡ SIGNALMISCHER      $\nu_i$ ≡ JUSTIERBARE VERZÖGERUNG

Fig.3

Fig.4

EP 0 873 524 B1

Fig.5

Fig.6

SIGNALEINGANG

SIGNALAUSGANG

| SR1 τ | SR2 2τ | SR3 3τ | | SRy yτ |
|---|---|---|---|---|

START VON HAND

STARTSIGNAL VON DER GEPULSTEN QUELLE

AB  UP/DOWN ZÄHLER 1  AUF

AB  UP/DOWN ZÄHLER 2  AUF

AB  UP/DOWN ZÄHLER 3  AUF

AB  UP/DOWN ZÄHLER y  AUF

VERZÖGERUNG τ0

BEOBACHTUNGSINTERVALLGENERATOR τ, 2τ, 3τ...

PERIODISCH GESTEUERTES REGISTER DES FREQUENZANALYSATORS (PGRFA)

(PGRFA)

(PGRFA)

(PGRFA)

EP 0 873 524 B1

EP 0 873 524 B1

SRT T | SR1 τ | SR2 2τ | SR3 3τ | SRy yτ

START VON HAND

STARTSIGNAL VON DER GEPULSTEN QUELLE

VERZÖGE- RUNG τ₀

BEOBACHTUNGS- ZEITGENERATOR T_M

AB | UP/DOWN ZÄHLER 1 | AUF

AB | UP/DOWN ZÄHLER 2 | AUF

AB | UP/DOWN ZÄHLER 3 | AUF

AB | UP/DOWN ZÄHLER y | AUF

SIGNAL- GESTEUERTES REGISTER DES FREQUENZANA- LYSATORS (SGRFA)

(SGRFA)

(SGRFA)

(SGRFA)

LESE U/D ZÄHLER SAMMELSCHIENE

BEOBACHTUNGSZEIT T_M SAMMELSCHIENE

Fig.7